# EUROPEAN PATENT SPECIFICATION

(11) **EP 4 524 715 B1**
(45) Date of publication and mention of the grant of the patent: **15.07.2026**
(21) Application number: 24195581.4
(22) Date of filing: 21.08.2024
(51) Int. Cl.: G06F 3/06, G06F 12/02

(54) **STORAGE DEVICE AND ELECTRONIC APPARATUS INCLUDING THE SAME**
SPEICHERVORRICHTUNG UND ELEKTRONISCHE VORRICHTUNG DAMIT
DISPOSITIF DE STOCKAGE ET APPAREIL ÉLECTRONIQUE LE COMPRENANT

(30) Priority: 13.09.2023 KR 20230122077
(43) Date of publication of application: 19.03.2025
(73) Proprietor: Samsung Electronics Co., Ltd, Suwon-si, Gyeonggi-do 16677 (KR)
(72) Inventor: PARK, Taejin, Suwon-si, Gyeonggi-do 16677 (KR); KWON, Kirock, Suwon-si, Gyeonggi-do 16677 (KR)
(74) Representative: Kuhnen & Wacker Patent- und Rechtsanwaltsbüro PartG mbB

(56) References cited:
- US-A1- 2019 354 476
- US-A1- 2020 363 965

## Description

### BACKGROUND

The present disclosure relates to a storage device capable of performing a bad block management operation.

US 2020/363965 A1 discloses a memory system that includes a memory device including a plurality of memory blocks, and a controller in communication with the memory device to control an operation of the memory device, the controller allocating, among the plurality of memory blocks, a normal region and a redundancy region. The controller divides the normal region into a user region for storing user data, a user overprovisioning region for user data management, a map region for storing map data, and a map overprovisioning region for map data management, and divides the redundancy region into a reserved region and an additional map overprovisioning region, and wherein the reserved region, upon determination that a block in the normal region is a bad block, replaces the bad block.

Memory devices are used to store data and are classified into volatile memory and nonvolatile memory. Nonvolatile memory, such as NAND flash memory, may include a bad block physically damaged so as not to guarantee data reliability. A bad block may include an initial bad block generated when nonvolatile memory was initially manufactured and a runtime bad block generated while using the nonvolatile memory. A storage device may perform a bad block management operation to prevent data from being lost by being written on such a bad block.

In this case, in a maximum bad block state in which the number of bad blocks in nonvolatile memory is greater than the maximum number of bad blocks, the storage device may change to a read only mode in which data writing is not further allowed. If the storage device is in the read only mode, data update is stopped, and it is needed to replace the storage device. However, in apparatuses, such as autonomous vehicles, in which data update is essential, stopping the data update by changing to the read only mode due to the maximum bad block state may cause a fatal problem. Therefore, a method capable of postponing changing to the read only mode in the maximum bad block state is needed.

### SUMMARY

The invention is set out in the appended claims.

One or more embodiments provide a storage device that may postpone changing to a read only mode in a maximum bad block state.

According to an aspect of an example embodiment, a storage device includes: nonvolatile memory including a plurality of memory blocks in any one of a user area, a reserved area, and an over-provisioning (OP) area; and a storage controller configured to perform a bad block management operation on the plurality of memory blocks, wherein the storage controller is further configured to: based on a memory block in the user area being detected as a bad block, determine whether a number of bad blocks is greater than a maximum number of bad blocks, and based on the number of bad blocks being greater than the maximum number of bad blocks, decrease a capacity of the user area based on a use ratio of the user area and maintain an OP capacity of the OP area as it is.

According to an aspect of an example embodiment, a storage device includes: nonvolatile memory including a plurality of planes, each of the plurality of planes including a plurality of memory blocks; and a storage controller configured to perform a bad block management operation on each of the plurality of planes, wherein the plurality of memory blocks in each of the plurality of planes are in any one of a user area, a reserved area, and an over-provisioning (OP) area, the plurality of planes includes a first plane, the storage controller is further configured to, based on a memory block in the user area of the first plane being detected as a bad block, perform a subsequent operation based on whether a number of bad blocks of the first plane is greater than a maximum number of bad blocks and a use ratio of the user area of the first plane, and the subsequent operation includes decreasing a capacity of the user area of the first plane.

According to an aspect of an example embodiment, an electronic apparatus includes: a host device configured to generate a write request or read request for data; and a storage device configured to perform an operation corresponding to the write request or the read request, wherein the storage device includes: nonvolatile memory including a plurality of memory blocks in any one of a user area, a reserved area, and an over-provisioning (OP) area; and a storage controller configured to perform a bad block management operation on the plurality of memory blocks, and the storage controller is further configured to: based on a memory block in the user area being detected as a bad block, determine whether a number of bad blocks is greater than a maximum number of bad blocks, and based on the number of bad blocks being greater than the maximum number of bad blocks, decrease a capacity of the user area based on a use ratio of the user area and transmit a replacement notification to the host device.

### BRIEF DESCRIPTION OF THE DRAWINGS

Embodiments will be more clearly understood from the following detailed description taken in conjunction with the accompanying drawings in which:
FIG. 1 is a block diagram illustrating an electronic apparatus including a storage device, according to an embodiment;
FIG. 2 illustrates an operation of detecting a bad block in a state in which a first plane of nonvolatile memory of a storage device is not in a maximum bad block state, according to an embodiment;
FIG. 3 illustrates an operation of detecting a bad block in a state in which a first plane of nonvolatile memory of a storage device is in the maximum bad block state, according to an embodiment;
FIG. 4 is an example of a maximum decreasing capacity reference table usable in a storage device, according to an embodiment;
FIG. 5 is an example of a detailed configuration of a replacement notification and a caution notification which may be transmitted from a storage device, according to an embodiment;
FIG. 6 is a flowchart illustrating an operating method of a storage device, according to an embodiment;
FIG. 7 is a flowchart illustrating an operation when a storage device is in the maximum bad block state, according to an embodiment;
FIG. 8 is a flowchart illustrating an operating method of a storage device, according to another embodiment;
FIG. 9 is a signaling diagram illustrating an operating method of an electronic apparatus, according to an embodiment;
FIG. 10 is a block diagram illustrating a solid-state drive (SSD) system according to an embodiment; and
FIG. 11 is a block diagram illustrating a mobile device according to an embodiment.

### DETAILED DESCRIPTION

Hereinafter, embodiments are described in detail with reference to the accompanying drawings.

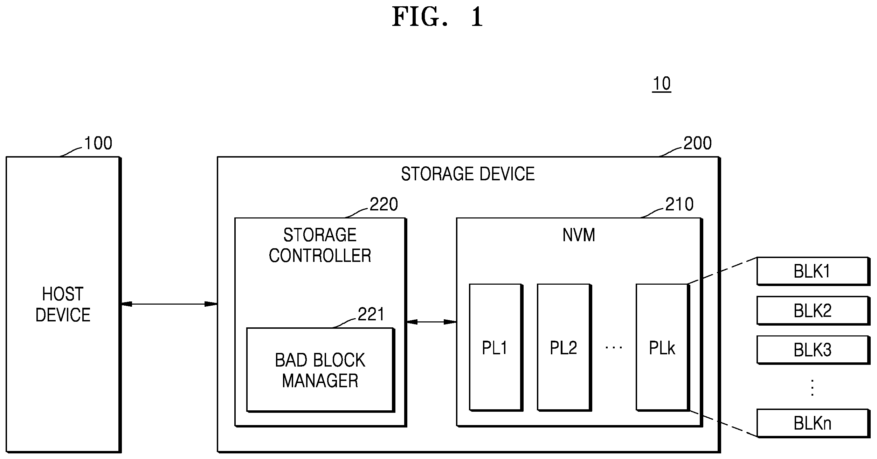

FIG. 1 is a block diagram illustrating an electronic apparatus 10 including a storage device 200, according to an embodiment.

Referring to FIG. 1, the electronic apparatus 10 according to an embodiment may include a host device 100 and the storage device 200.

In an embodiment, the electronic apparatus 10 may include a personal computer (PC), a data server, an ultra-mobile PC (UMPC), a workstation, a net-book, a network-attached storage (NAS), a smart television, an Internet of Things (IoT) device, a vehicle, or a portable electronic device. The portable electronic device may include a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, a wearable device, or the like.

The host device 100 may store data in the storage device 200 and read data from the storage device 200. The host device 100 may include a data processing device, such as a central processing unit (CPU), a processor, a microprocessor, or an application processor (AP), capable of processing data. For example, the host device 100 may include a system-on-a-chip (SoC).

The host device 100 may communicate with the storage device 200 through various interfaces. The host device 100 may generate a write request or read request for data. The host device 100 may transmit a write request or a read request to the storage device 200.

The storage device 200 may perform an operation corresponding to the write request or read request received from the host device 100. If the storage device 200 receives a write request from the host device 100, the storage device 200 may store therein data corresponding to the write request. If the storage device 200 receives a read request from the host device 100, the storage device 200 may search the inside thereof for data corresponding to the read request and transmit the data to the host device 100.

The storage device 200 may be implemented by one of various types of devices according to a host interface protocol connected to the host device 100. For example, the storage device 200 may be internal memory embedded in the electronic apparatus 10. For example, the storage device 200 may be implemented by one of various types of devices, such as an embedded multimedia card (eMMC), an MMC, a solid state drive (SSD), a universal flash storage (UFS), an embedded UFS, a reduced size (RS)-MMC, a micro-MMC-type MMC, a compact flash (CF) card, a secure digital (SD) card, a micro-SD card, a mini-SD card, an extreme digital (xD) card, a smart media) card, and a memory stick.

The storage device 200 may include a nonvolatile memory (NVM) 210 and a storage controller 220.

The NVM 210 may store data therein. The NVM 210 may include a memory cell array including nonvolatile memory cells which may maintain data even when power of the storage device 200 is cut off. In an embodiment, the NVM 210 may be a NAND flash memory. However, embodiments are not limited thereto, and the NVM 210 may be any one of resistive memories, such as resistive random access memory (ReRAM), phase change RAM (PRAM), and magnetic RAM (MRAM). However, hereinafter, a description is made based on the assumption that the NVM 210 is a NAND flash memory.

The NVM 210 may include a plurality of planes PL1 to PLk (k is a natural number). Each of the plurality of planes PL1 to PLk may be connected to a page buffer (not shown). Each of the plurality of planes PL1 to PLk may include a plurality of memory blocks BLK1 to BLKn (n is a natural number).

In embodiments, the NVM 210 may include a plurality of dies or a plurality of chips. For example, the NVM 210 may include a plurality of chips, each of the plurality of chips may include a plurality of dies, and each of the plurality of dies may include the plurality of planes PL1 to PLk.

In an embodiment, the plurality of memory blocks BLK1 to BLKn included in each of the plurality of planes PL1 to PLk of the NVM 210 may be included in any one of a user area, a reserved area, and an over-provisioning (OP) area. The user area may be an area used to store user data received from the host device 100. The reserved area may be an area used to replace a bad block detected from among memory blocks included in the user area. The OP area may be an area used as a temporary work area when a work, such as garbage collection, wear leveling, or bad block management, on the user area is performed. Herein, the number of memory blocks included in the user area may be greater than the number of memory blocks included in the reserved area and the number of memory blocks included in the OP area.

The storage controller 220 may control the NVM 210 such that data stored in the NVM 210 is read in response to a read request from the host device 100 or data is written on the NVM 210 in response to a write request from the host device 100. The storage controller 220 may include the buffer memory (not shown), and data received from the host device 100 or the NVM 210 may be temporarily stored in the buffer memory (not shown) and then transmitted to the NVM 210 or the host device 100.

The storage controller 220 may perform a bad block management operation on the plurality of memory blocks BLK1 to BLKn. In this case, the storage controller 220 may perform a bad block management operation on each of the plurality of planes PL1 to PLk. That is, the storage controller 220 may perform a bad block management operation in a unit of plane of the NVM 210. In a description to be made below, a bad block management operation may be performed in a unit of plane of the NVM 210 unless the context clearly indicates otherwise.

The storage controller 220 may manage, in a bad block list, a memory block detected as a bad block among the plurality of memory blocks BLK1 to BLKn included in the NVM 210 through a bad block management operation, thereby preventing data from being lost by being written into the detected bad block.

If a memory block included in the user area is detected as a bad block, the storage controller 220 may perform a subsequent operation based on whether the number of bad blocks is greater than the maximum number of bad blocks and a use ratio of the user area. Herein, the subsequent operation may include an operation of decreasing the capacity of the user area.

In more detail, if a memory block included in the user area is detected as a bad block, the storage controller 220 may determine whether the number of bad blocks is greater than the maximum number of bad blocks.

The maximum number of bad blocks corresponds to the maximum number by which a memory block detected as a bad block is replaceable with a memory block included in the reserved area. Therefore, the maximum number of bad blocks is set to be the same as the number of memory blocks included in the reserved area.

If the number of bad blocks is greater than the maximum number of bad blocks, the storage controller 220 may be in a status in which a memory block detected as a bad block is not further replaceable with a memory block included in the reserved area. Therefore, if the number of bad blocks is greater than the maximum number of bad blocks, the storage controller 220 may decrease the capacity of the user area based on the use ratio of the user area.

The use ratio of the user area may indicate a ratio of a data written capacity to the total capacity of the user area. The storage controller 220 may decrease the capacity of the user area based on whether the use ratio of the user area is greater than a reference use ratio.

Herein, the reference use ratio may be a ratio that is a reference for determining whether a problem occurs in an operation of the storage device 200 when the capacity of the user area is decreased due to too much data written in the user area, and may be set to, for example, 90 %.

When the use ratio of the user area is greater than the reference use ratio, if the capacity of the user area is decreased, a problem may occur in an operation of the storage device 200. Therefore, when the number of bad blocks is greater than the maximum number of bad blocks, if the use ratio of the user area is greater than the reference use ratio, the storage controller 220 may set the NVM 210 to a read only mode.

If the use ratio of the user area is less than or equal to the reference use ratio, no problem may occur even when the capacity of the user area is decreased. Therefore, when the number of bad blocks is greater than the maximum number of bad blocks, if the use ratio of the user area is less than or equal to the reference use ratio, the storage controller 220 may decrease the capacity of the user area based on a currently decreased capacity of the user area and a maximum decreasable capacity of the user area.

The currently decreased capacity of the user area may indicate a capacity of the user area, which has been decreased due to already occurred bad blocks exceeding the maximum number of bad blocks.

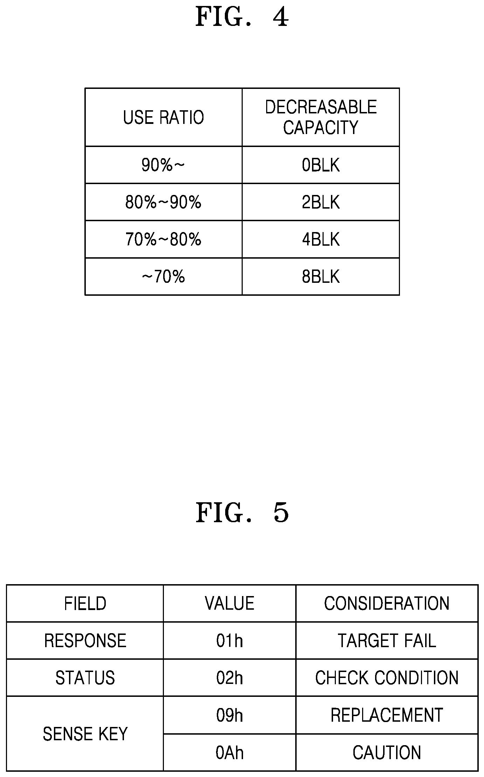

The maximum decreasable capacity of the user area may indicate a capacity of the user area, which may guarantee that no problem occurs in an operation of the storage device 200 even when the capacity of the user area is decreased. For example, the term "decreasable" includes the meaning of "able to be decreased." In this case, the maximum decreasable capacity of the user area may be set based on a maximum decreasing capacity reference table indicating decreasable capacities according to use ratios of the user area. That is, the maximum decreasable capacity of the user area may be set differently according to use ratios of the user area. The maximum decreasing capacity reference table is described below with reference to FIG. 4.

If the currently decreased capacity of the user area is less than the maximum decreasable capacity of the user area, no problem may occur in an operation of the storage device 200 even when the capacity of the user area is additionally decreased. Therefore, if the currently decreased capacity of the user area is less than the maximum decreasable capacity of the user area, the storage controller 220 may decrease the capacity of the user area.

Otherwise, if the currently decreased capacity of the user area is the same as the maximum decreasable capacity of the user area, a problem may occur in an operation of the storage device 200 when the capacity of the user area is additionally decreased. Therefore, if the currently decreased capacity of the user area is the same as the maximum decreasable capacity of the user area, the storage controller 220 may set the NVM 210 to the read only mode.

As described above, the storage controller 220 of the storage device 200 may not immediately change to the read only mode even when a bad block occurs in a state in which the number of bad blocks is greater than the maximum number of bad blocks, thereby preventing an accident which may occur due to changing to the read only mode by postponing a time point at which the storage device 200 changes to the read only mode.

In addition, when the number of bad blocks is greater than the maximum number of bad blocks, the storage controller 220 may maintain the capacity of the OP area as it is. That is, even when the number of bad blocks is greater than the maximum number of bad blocks, the storage controller 220 may not replace a memory block detected as a bad block with a memory block in the OP area. As described above, the storage controller 220 may maintain the capacity of the OP area as it is, thereby preventing a decrease in the performance and an increase in a latency of the storage device 200 due to a decrease in the capacity of the OP area.

If the number of bad blocks is greater than the maximum number of bad blocks, the storage controller 220 may transmit a replacement notification to the host device 100. The replacement notification may be a notification for notifying that the storage device 200 is needed to be replaced because the number of bad blocks is greater than the maximum number of bad blocks. A detailed configuration of the replacement notification is described below with reference to FIG. 5.

If the replacement notification is received, the host device 100 may notify a user that the storage device 200 is needed to be replaced, through an output device, such as a display or a speaker, included in the electronic apparatus 10. As described above, by notifying the user that the storage device 200 is needed to be replaced, the electronic apparatus 10 may guide the user to replace the storage device 200 before the storage device 200 included in the electronic apparatus 10 is in the read only mode.

If the number of bad blocks is less than or equal to the maximum number of bad blocks, this may indicate that at least one of memory blocks included in the reserved area remains without replacing bad blocks. Therefore, if the number of bad blocks is less than or equal to the maximum number of bad blocks, the storage controller 220 may replace a memory block detected as a bad block with a memory block included in the reserved area.

When the number of bad blocks is less than or equal to the maximum number of bad blocks, if the number of bad blocks is greater than a reference ratio of the maximum number of bad blocks, the storage controller 220 may transmit a caution notification to the host device 100. That is, even when the number of bad blocks is less than the maximum number of bad blocks, if the number of bad blocks is greater than the reference ratio of the maximum number of bad blocks, the storage controller 220 may transmit the caution notification to the host device 100. In an embodiment, the reference ratio may be set to 90 %, and in this case, if number of bad blocks is greater than 90 % of the maximum number of bad blocks, the storage controller 220 may transmit the caution notification to the host device 100.

The caution notification may be a notification for notifying that the storage device 200 is soon needed to be replaced because there is a high possibility that the number of bad blocks is soon greater than the maximum number of bad blocks although the number of bad blocks is not greater than the maximum number of bad blocks. A detailed configuration of the caution notification is described below with reference to FIG. 5.

Upon receiving the caution notification, the host device 100 may notify the user that the storage device 200 is soon needed to be replaced, through the output device, such as a display or a speaker, included in the electronic apparatus 10. As described above, by notifying the user in advance that the storage device 200 is needed to be replaced before the exact timing of the replacement, the electronic apparatus 10 may guide the user to replace the storage device 200 before the storage device 200 included in the electronic apparatus 10 is in the read only mode.

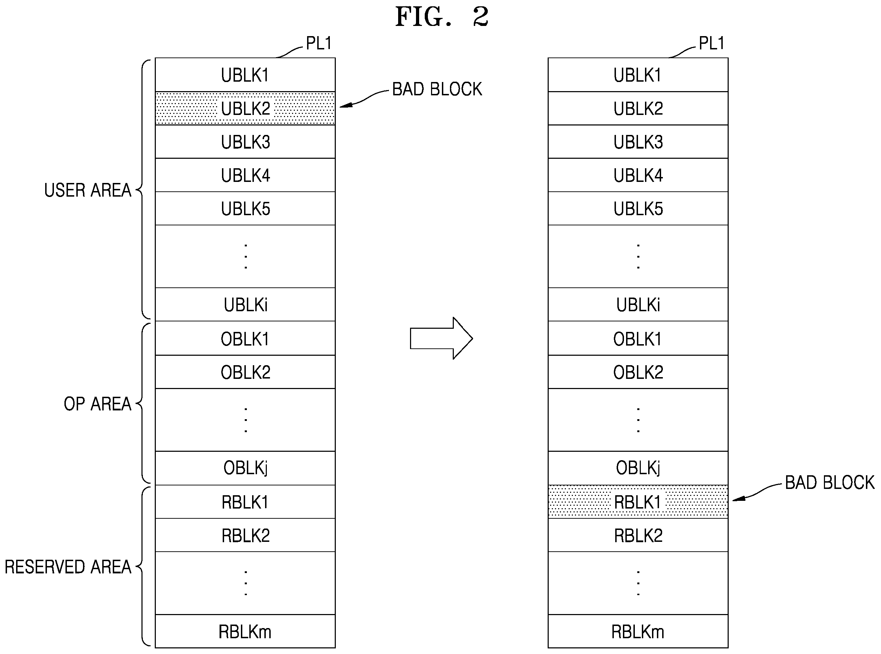

FIG. 2 illustrates an operation when a bad block is detected in a state in which a first plane of an NVM of a storage device is not in a maximum bad block state, according to an embodiment.

Referring to FIG. 2, an example of a structure of a first plane PL1 of the NVM 210 is shown. The first plane PL1 may include a plurality of user memory blocks UBLK1 to UBLKi (i is a natural number) included in the user area, a plurality of OP memory blocks OBLK1 to OBLKj (j is a natural number), and a plurality of reserved memory blocks RBLK1 to RBLKm (m is a natural number).

In the embodiment of FIG. 2, in the structure of the first plane PL1 shown at the left side, the storage controller 220 may detect a second user memory block UBLK2 as a bad block (shaded by gray). As described above, if a memory block included in the user area of the first plane PL1 is detected as a bad block, the storage controller 220 may perform a subsequent operation based on whether the number of bad blocks of the first plane PL1 is greater than the maximum number of bad blocks and a use ratio of the user area of the first plane PL1.

In the embodiment of FIG. 2, the number of bad blocks of the first plane PL1 is 1 and is less than or equal to m (the same as the number of reserved memory blocks RBLK1 to RBLKm) that is the maximum number of bad blocks, and thus, the storage controller 220 may replace the second user memory block UBLK2 detected as a bad block with a memory block included in the reserved area of the first plane PL1. Because all of the plurality of reserved memory blocks RBLK1 to RBLKm included in the reserved area of the first plane PL1 are not bad blocks, the storage controller 220 may replace the second user memory block UBLK2 with any one of the plurality of reserved memory blocks RBLK1 to RBLKm included in the reserved area.

In the embodiment of FIG. 2, as in the structure of the first plane PL1 shown at the right side, the storage controller 220 may replace the second user memory block UBLK2 detected as a bad block with a first reserved memory block RBLK1 included in the reserved area. As described above, an operation, performed by the storage controller 220, of replacing a memory block detected as a bad block with a memory block included in the reserved area may not be an operation of actually changing the position of a memory block but an operation of changing a logical connection.

As described above, when the number of bad blocks of the first plane PL1 is less than or equal to the maximum number of bad blocks, even though a memory block included in the user area is detected as a bad block, the capacity of the user area may be equally maintained as a sum of the capacities of the plurality of user memory blocks UBLK1 to UBLKi. In addition, the capacity of the OP area may be equally maintained as a sum of the capacities of the plurality of OP memory blocks OBLK1 to OBLKj.

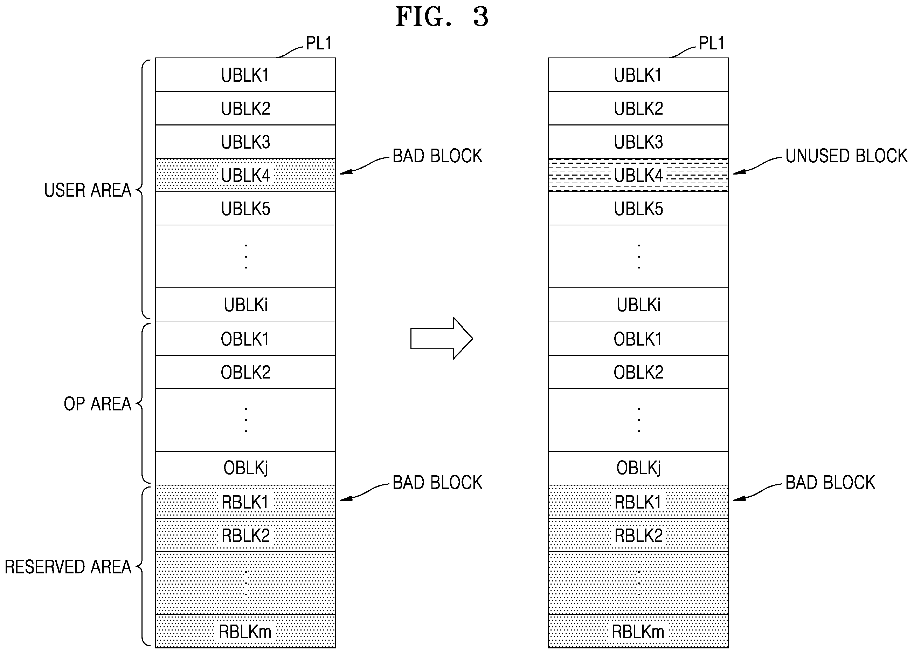

FIG. 3 illustrates an operation when a bad block is detected in a state in which a first plane of an NVM of a storage device is in the maximum bad block state, according to an embodiment.

Referring to FIG. 3, the same structure of the first plane PL1 of the NVM 210 as described above with reference to FIG. 2 is shown.

In the embodiment of FIG. 3, in the structure of the first plane PL1 shown at the left side, the storage controller 220 may detect a fourth user memory block UBLK4 as a bad block. As described above, if a memory block included in the user area of the first plane PL1 is detected as a bad block, the storage controller 220 may perform a subsequent operation based on whether the number of bad blocks of the first plane PL1 is greater than the maximum number of bad blocks and a use ratio of the user area of the first plane PL1.

In the embodiment of FIG. 3, the number of bad blocks of the first plane PL1 is m+1 (the fourth user memory block UBLK4 and the plurality of reserved memory blocks RBLK1 to RBLKm) and is greater than m (the same as the number of reserved memory blocks RBLK1 to RBLKm) that is the maximum number of bad blocks, and thus, the storage controller 220 cannot replace the fourth user memory block UBLK4 detected as a bad block with a memory block included in the reserved area of the first plane PL1. In this case, the storage controller 220 may perform a subsequent operation based on the use ratio of the user area of the first plane PL1.

If the use ratio of the user area of the first plane PL1 is greater than the reference use ratio, the storage controller 220 may set the NVM 210 to the read only mode.

Otherwise, if the use ratio of the user area of the first plane PL1 is less than or equal to the reference use ratio, the storage controller 220 may perform a subsequent operation based on a currently decreased capacity of the user area and the maximum decreasable capacity of the user area.

In the embodiment of FIG. 3, the currently decreased capacity is 0 and is thus less than the maximum decreasable capacity. Therefore, the storage controller 220 may decrease the capacity of the user area by setting the fourth user memory block UBLK4 as an unused block.

As described above, when the number of bad blocks of the first plane PL1 is greater than the maximum number of bad blocks, the capacity of the user area may decrease to be less than the capacities of the plurality of user memory blocks UBLK1 to UBLKi. As described above, even when the number of bad blocks is greater than the maximum number of bad blocks, the storage device 200 may decrease the capacity of the user area without immediately changing to the read only mode, thereby preventing an accident which may occur due to changing to the read only mode by postponing a time point at which the storage device 200 changes to the read only mode.

In this case, the capacity of the OP area may be equally maintained as a sum of the capacities of the plurality of OP memory blocks OBLK1 to OBLKj. Therefore, a decrease in the performance and an increase in a latency of the storage device 200 due to a decrease in the capacity of the OP area may be prevented.

Unlike the embodiment of FIG. 3, if the currently decreased capacity is the same as the maximum decreasable capacity, the storage controller 220 may set the NVM 210 to the read only mode.

FIG. 4 is an example of a maximum decreasing capacity reference table usable in a storage device, according to an embodiment.

Referring to FIG. 4, an example of the maximum decreasing capacity reference table indicating a decreasable capacity according to a use ratio of the user area is shown.

First, if the use ratio of the user area is greater than 90 %, the decreasable capacity may be zero memory blocks. In this case, 90 % may be set as the reference use ratio. Therefore, if the use ratio of the user area is greater than the reference use ratio (90 % in the embodiment of FIG. 4), the storage controller 220 may change the NVM 210 to the read only mode without decreasing the capacity of the user area.

If the use ratio of the user area is greater than 80 % and less than or equal to 90 %, the decreasable capacity may be two memory blocks. In this case, the storage controller 220 may set two memory blocks as the maximum decreasable capacity.

If the use ratio of the user area is greater than 70 % and less than or equal to 80 %, the decreasable capacity may be four memory blocks. In this case, the storage controller 220 may set four memory blocks as the maximum decreasable capacity.

If the use ratio of the user area is less than or equal to 70 %, the decreasable capacity may be eight memory blocks. In this case, the storage controller 220 may set eight memory blocks as the maximum decreasable capacity.

FIG. 5 is an example of a detailed configuration of the replacement notification and the caution notification which may be transmitted from a storage device, according to an embodiment.

Referring to FIG. 5, a table indicating values which may be included for the replacement notification and the caution notification which may be transmitted from the storage device 200 to the host device 100 is shown.

The storage device 200 may notify the host device 100 of target fail by transmitting a target fail response value in a response field. In an embodiment, the target fail may indicate the occurrence of exceeding the maximum number of bad blocks or exceeding the reference ratio of the maximum number of bad blocks. In the embodiment of FIG. 5, the target fail response value may be '01h'.

The storage device 200 may transmit a condition check status value in a status field to notify the host device 100 that checking the status of the storage device 200 is needed. In an embodiment, condition check may indicate that the storage device 200 may be set to the read only mode due to exceeding the maximum number of bad blocks or exceeding the reference ratio of the maximum number of bad blocks. In the embodiment of FIG. 5, the condition check status value may be '02h'.

The storage device 200 may transmit a replacement sense key value in a sense key field to notify the host device 100 that replacing the storage device 200 is needed. In an embodiment, replacement may indicate that replacing the storage device 200 is needed due to exceeding the maximum number of bad blocks. In the embodiment of FIG. 5, the replacement sense key value may be '09h'.

The storage device 200 may transmit a caution sense key value in the sense key field to notify the host device 100 that replacing the storage device 200 is soon needed. In an embodiment, caution may indicate that replacing the storage device 200 is soon needed due to exceeding the reference ratio of the maximum number of bad blocks. In the embodiment of FIG. 5, the caution sense key value may be '0Ah'.

In an embodiment, if the number of bad blocks is greater than the maximum number of bad blocks, the storage device 200 may transmit, to the host device 100, the replacement notification including the target fail response value, the condition check status value, and the replacement sense key value. In addition, in an embodiment, if the number of bad blocks is greater than the reference ratio of the maximum number of bad blocks, the storage device 200 may transmit, to the host device 100, the caution notification including the target fail response value, the condition check status value, and the caution sense key value. As described above, when the replacement notification is transmitted and when the caution notification is transmitted, the storage device 200 may transmit the same values in the response field and the status field and transmit different values in the sense key field, respectively.

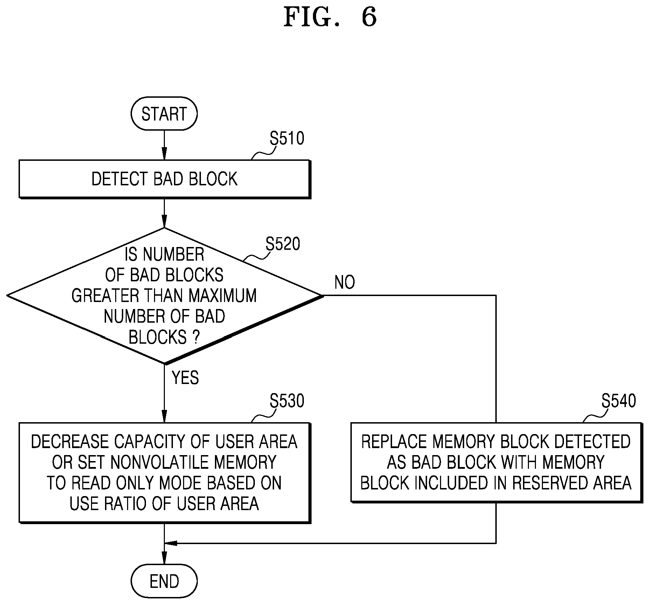

FIG. 6 is a flowchart illustrating a method of operating a storage device, according to an embodiment.

Referring to FIG. 6, in operation S510, the storage device 200 may detect a bad block. If program fail occurs when data is programmed on the NVM 210 in response to a write request received from the host device 100 through the storage controller 220, the storage device 200 may detect a bad block.

In operation S520, the storage device 200 may determine whether the number of bad blocks is greater than the maximum number of bad blocks.

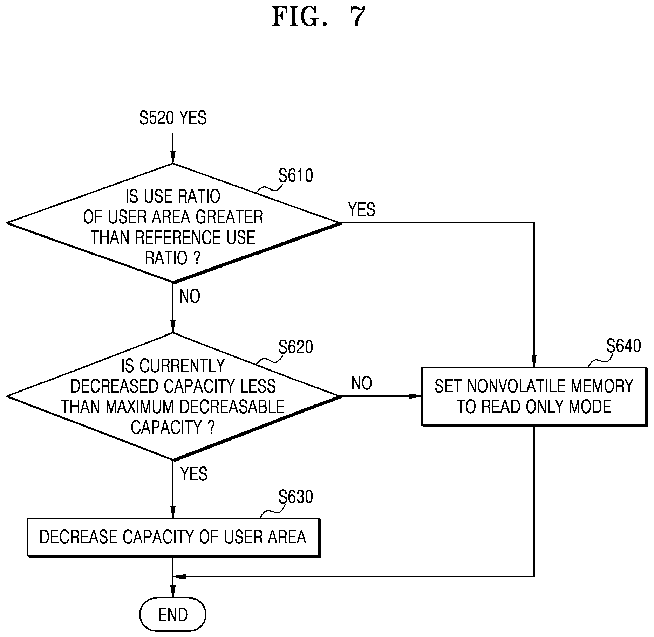

If it is determined that the number of bad blocks is greater than the maximum number of bad blocks, the method proceeds to operation S530, and the storage device 200 may decrease the capacity of the user area or set the NVM 210 to the read only mode based on a use ratio of the user area. A detailed operation of operation S530 may be described below with reference to FIG. 7.

If it is determined that the number of bad blocks is not greater than the maximum number of bad blocks, the method proceeds to operation S540, and the storage device 200 may replace a memory block detected as the bad block with a memory block included in the reserved area.

FIG. 7 is a flowchart illustrating an operation when a storage device is in the maximum bad block state, according to an embodiment.

Referring to FIG. 7, an operation performed when it is determined in operation S520 of FIG. 6 that the number of bad blocks is greater than the maximum number of bad blocks is shown.

In operation S610, the storage device 200 may determine whether the use ratio of the user area is greater than the reference use ratio.

If it is determined that the use ratio of the user area is not greater than the reference use ratio, the operation may proceed to operation S620, and the storage device 200 may determine whether a currently decreased capacity of the user area is less than the maximum decreasable capacity of the user area.

If it is determined that the currently decreased capacity of the user area is less than the maximum decreasable capacity of the user area, the operation proceeds to operation S630, and the storage device 200 may decrease the capacity of the user area. As described above, even when the number of bad blocks is greater than the maximum number of bad blocks, the storage device 200 may decrease the capacity of the user area without immediately changing to the read only mode, thereby preventing an accident which may occur due to changing to the read only mode by postponing a time point at which the storage device 200 changes to the read only mode.

If it is determined that the currently decreased capacity of the user area is not less than the maximum decreasable capacity, the operation proceeds to operation S640, and the storage device 200 may set the NVM 210 to the read only mode.

If it is determined in operation S610 that the use ratio of the user area is greater than the reference use ratio, the operation proceeds to operation S640, and the storage device 200 may set the NVM 210 to the read only mode.

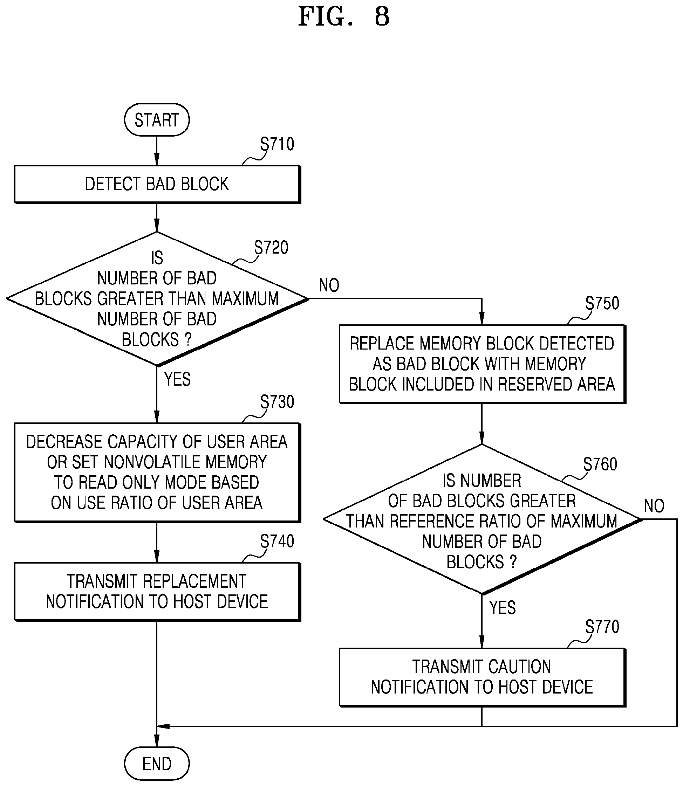

FIG. 8 is a flowchart illustrating a method of operating a storage device, according to another embodiment.

Referring to FIG. 8, a method of operating a storage device, which is similar to the method of FIG. 6, is shown. Operations S710 to S730 of FIG. 8 may be the same as operations S510 to S530 of FIG. 6.

After performing operation S730, in operation S740, the storage device 200 may transmit a replacement notification to the host device 100. As described above, if the number of bad blocks is greater than the maximum number of bad blocks, the storage device 200 may transmit the replacement notification to the host device 100 to guide a user to replace the storage device 200 before the storage device 200 included in the electronic apparatus 10 is in the read only mode.

Operation S750 of FIG. 8 may be the same as operation S540 of FIG. 6.

After performing operation S750, in operation S760, the storage device 200 may determine whether the number of bad blocks is greater than a reference ratio of the maximum number of bad blocks.

If the number of bad blocks is not greater than the reference ratio of the maximum number of bad blocks, the storage device 200 may not perform an additional operation.

If the number of bad blocks is greater than the reference ratio of the maximum number of bad blocks, in operation S770, the storage device 200 may transmit a caution notification to the host device 100. As described above, if the number of bad blocks is greater than the reference ratio of the maximum number of bad blocks, the storage device 200 may transmit the caution notification to the host device 100 to guide the user to replace the storage device 200 in advance before the NVM 210 included in the electronic apparatus 10 has the maximum bad blocks.

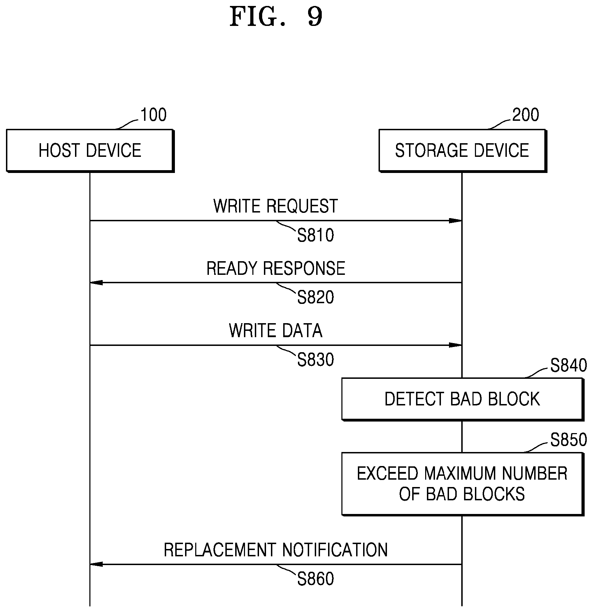

FIG. 9 is a signaling diagram illustrating a method of operating an electronic apparatus, according to an embodiment.

Referring to FIG. 9, in operation S810, the host device 100 may transmit a write request to the storage device 200.

In operation S820, the storage device 200 may transmit a ready response, indicating that write data is receivable, to the host device 100 in response to receiving the write request from the host device 100.

In operation S830, the host device 100 may transmit write data to the storage device 200 in response to receiving the ready response from the storage device 200.

In operation S840, the storage device 200 may detect a bad block in the NVM 210. In this case, the storage device 200 may detect a bad block if program fail occurs when the received write data is written on the NVM 210.

In operation S850, the storage device 200 may determine that the number of bad blocks is greater than the maximum number of bad blocks. Accordingly, the storage device 200 cannot replace a memory block detected as a bad block with a memory block included in the reserved area and thus may decrease the capacity of the user area or set the NVM 210 to the read only mode based on a use ratio of the user area.

In operation S860, the storage device 200 may transmit a replacement notification to the host device 100. In response that the storage device 200 transmits the replacement notification, the host device 100 may notify a user that the storage device 200 is needed to be replaced, through an output device, such as a display or a speaker.

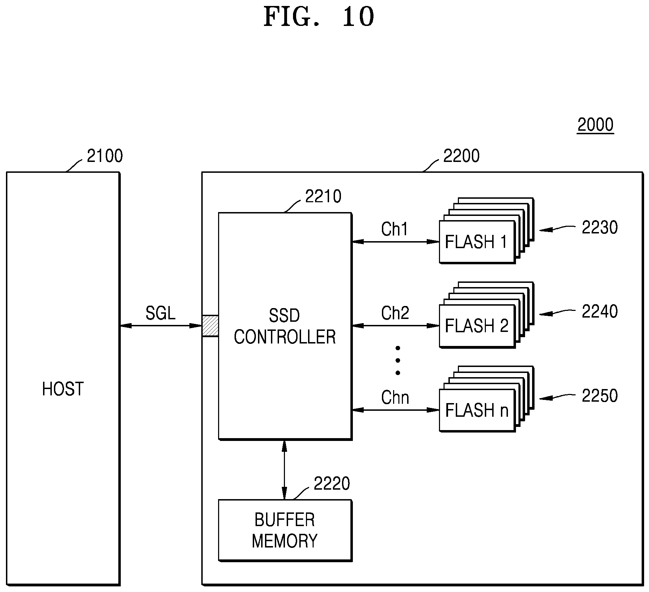

FIG. 10 is a block diagram illustrating an SSD system 2000 according to an embodiment.

Referring to FIG. 10, the SSD system 2000 may include a host 2100 and an SSD 2200. The SSD 2200 may transmit and receive a signal to and from the host 2100 through a signal connector SGL. The SSD 2200 may receive power from the host 2100 through a power connector (not shown).

The SSD 2200 may include an SSD controller 2210, a buffer memory 2220, and a plurality of memory devices 2230, 2240, and 2250. Herein, the SSD 2200 may be implemented using the storage device described above with reference to FIGS. 1 to 9.

Particularly, the storage device 200 of FIG. 1 may be applied as the SSD 2200. The SSD controller 2210 may communicate with the plurality of memory devices 2230, 2240, and 2250. The SSD controller 2210 may perform a bad block management operation on the plurality of memory devices 2230, 2240, and 2250, determine whether the number of bad blocks is greater than the maximum number of bad blocks if a memory block included in the user area is detected as a bad block, and decrease the capacity of the user area or set the plurality of memory devices 2230, 2240, and 2250 to the read only mode based on a use ratio of the user area if the number of bad blocks is greater than the maximum number of bad blocks.

The storage device 200 according to the embodiments described above may be mounted on or applied to not only the SSD system 2000 but also a memory card system, a computing system, a UFS, and the like. In addition, a bad block management method of the storage device 200, according to an embodiment, may be applied to various types of electronic systems on which an NVM is mounted.

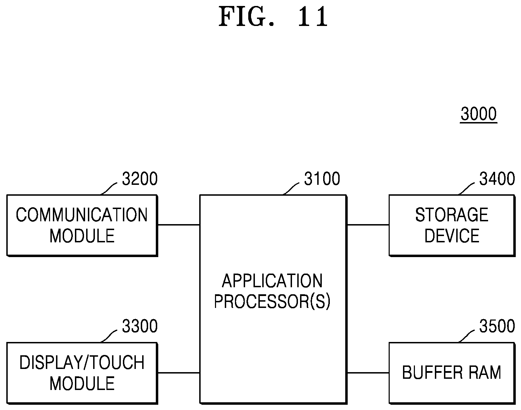

FIG. 11 is a block diagram illustrating a mobile device 3000 according to an embodiment.

Referring to FIG. 11, the mobile device 3000 may include an AP 3100, a communication module 3200, a display/touch module 3300, a storage device 3400, and buffer RAM 3500.

The AP 3100 may control a general operation of the mobile device 3000. The communication module 3200 may be implemented to control wired/wireless communication with the outside. The display/touch module 3300 may display data processed by the AP 3100 or receive data through a touch panel.

The buffer RAM 3500 may be implemented to temporarily store data needed for a processing operation of the mobile device 3000.

The storage device 3400 may be implemented to store user data. The storage device 3400 may include a memory card, an eMMC, an SSD, or a UFS device. The storage device 3400 may be implemented as the storage device 200 shown in FIG. 1.

A storage device according to an embodiment may be mounted using various forms of packages. In an embodiment, the storage device according to an embodiment may be mounted using packages, such as a package on package (PoP), a ball grid array (BGA) package, a chip scale package (CSP), a plastic leaded chip carrier (PLCC) package, a plastic dual in-line package (PDIP), a die in waffle pack, a die in wafer form, a chip on board (COB) package, a ceramic dual in-line package (CERDIP), a plastic metric quad flat pack package (MQFP), a thin quad flatpack package (TQFP), a small outline integrated circuit (SOIC) package, a shrink small outline package (SSOP), a thin small outline package (TSOP), a system in package (SIP), a multi-chip package (MCP), a wafer-level fabricated package (WFP), and a wafer-level processed stack package(WSP).

## Claims

1. A storage device comprising:
nonvolatile memory (210) comprising a plurality of memory blocks (BLK1 to BLKn) in any one of a user area, a reserved area, and an over-provisioning, OP, area; and
a storage controller (220) configured to perform a bad block management operation on the plurality of memory blocks (BLK1 to BLKn),
wherein the storage controller (220) is further configured to:
based on a memory block in the user area being detected as a bad block, determine whether a number of bad blocks is greater than a maximum number of bad blocks, and
based on the number of bad blocks being greater than the maximum number of bad blocks, decrease a capacity of the user area based on a use ratio of the user area and maintain an OP capacity of the OP area as it is,
wherein the maximum number of bad blocks corresponds to the maximum number by which a memory block detected as a bad block is replaceable with a memory block included in the reserved area.

2. The storage device of claim 1, wherein the storage controller (220) is further configured to, based on the use ratio of the user area being less than or equal to a reference use ratio and the number of bad blocks being greater than the maximum number of bad blocks, decrease the capacity of the user area based on a currently decreased capacity of the user area and a maximum decreasable capacity of the user area.

3. The storage device of claim 2, wherein the storage controller (220) is further configured to:
based on the currently decreased capacity of the user area being less than the maximum decreasable capacity of the user area, decrease the capacity of the user area, and
based on the currently decreased capacity of the user area being the same as the maximum decreasable capacity of the user area, set the nonvolatile memory (210) to a read only mode.

4. The storage device of claim 3, wherein the maximum decreasable capacity of the user area is set based on a maximum decreasing capacity reference table indicating decreasable capacities according to use ratios of the user area.

5. The storage device of any one of claims 1 to 4, wherein the storage controller (220) is further configured to, based on the use ratio of the user area being greater than a reference use ratio and the number of bad blocks being greater than the maximum number of bad blocks, set the nonvolatile memory (210) to a read only mode.

6. The storage device of any one of claims 1 to 5, wherein the storage controller (220) is further configured to, based on the number of bad blocks being greater than the maximum number of bad blocks, transmit a replacement notification to a host device.

7. The storage device of claim 6, wherein the replacement notification comprises a target fail response value, a condition check status value, and a replacement sense key value.

8. The storage device of any one of claims 1 to 7, wherein the storage controller (220) is further configured to, based on the number of bad blocks being less than or equal to the maximum number of bad blocks, replace the memory block detected as the bad block with a memory block in the reserved area.

9. The storage device of claim 8, wherein the storage controller (220) is further configured to, based on the number of bad blocks being greater than a reference ratio of the maximum number of bad blocks and the number of bad blocks being less than or equal to the maximum number of bad blocks, transmit a caution notification to a host device (100).

10. The storage device of claim 9, wherein the caution notification comprises a target fail response value, a condition check status value, and a caution sense key value.

11. The storage device of claim 1, wherein:
the nonvolatile memory (210) comprises a plurality of planes (PL1 to PLk), each of the plurality of planes comprising a plurality of memory blocks (BLK1 to BLKn); and
the storage controller (220) is configured to perform a bad block management operation on each of the plurality of planes (PL1 to PLk),
the plurality of memory blocks (BLK1 to BLKn) in each of the plurality of planes are in any one of a user area, a reserved area, and an over-provisioning, OP, area, the plurality of planes (PL1 to PLk) comprising a first plane,
the storage controller (220) is further configured to, based on a memory block in the user area of the first plane being detected as a bad block, perform a subsequent operation based on whether a number of bad blocks of the first plane is greater than a maximum number of bad blocks and a use ratio of the user area of the first plane, and
the subsequent operation comprises decreasing a capacity of the user area of the first plane.

12. The storage device of claim 11, wherein the storage controller (220) is further configured to, based on the number of bad blocks of the first plane being greater than the maximum number of bad blocks and the use ratio of the user area of the first plane being less than or equal to a reference use ratio, decrease the capacity of the user area of the first plane as the subsequent operation based on a currently decreased capacity of the user area of the first plane and a maximum decreasable capacity of the user area.

13. The storage device of claim 12, wherein the storage controller (220) is further configured to:
based on the currently decreased capacity of the user area of the first plane being less than the maximum decreasable capacity of the user area, decrease the capacity of the user area of the first plane as the subsequent operation, and
based on the currently decreased capacity of the user area of the first plane being the same as the maximum decreasable capacity of the user area, set the nonvolatile memory (210) to a read only mode as the subsequent operation.

14. The storage device of any one of claims 11 to 13, wherein the storage controller (220) is further configured to, based on the number of bad blocks of the first plane being greater than the maximum number of bad blocks, maintain an OP capacity of the OP area of the first plane as it is.

15. The storage device of any one of claims 11 to 14, wherein the storage controller (220) is further configured to, based on the number of bad blocks of the first plane being greater than the maximum number of bad blocks, perform the subsequent operation and then transmit, to a host device (100), a replacement notification, and
wherein the replacement notification comprises a target fail response value, a condition check status value, and a replacement sense key value.

## Patentansprüche

1. Speichervorrichtung, aufweisend:
einen nichtflüchtigen Speicher (210), aufweisend eine Vielzahl von Speicherblöcken (BLK1 bis BLKn) in einem beliebigen von einem Benutzerbereich, einem reservierten Bereich und einem Überprovisionierungsbereich; und
einen Speichercontroller (220), der dazu konfiguriert ist, eine Operation zur Verwaltung fehlerhafter Blöcke an der Vielzahl von Speicherblöcken (BLK1 bis BLKn) durchzuführen,
wobei der Speichercontroller (220) ferner dazu konfiguriert ist:
wenn ein Speicherblock in dem Benutzerbereich als fehlerhafter Block erfasst wird, zu bestimmen, ob eine Anzahl fehlerhafter Blöcke größer als eine maximale Anzahl fehlerhafter Blöcke ist, und
wenn die Anzahl fehlerhafter Blöcke größer als die maximale Anzahl fehlerhafter Blöcke ist, eine Kapazität des Benutzerbereichs auf Grundlage eines Nutzungsverhältnisses des Benutzerbereichs zu verringern und eine Überprovisionierungskapazität des Überprovisionierungsbereichs unverändert aufrechtzuerhalten,
wobei die maximale Anzahl fehlerhafter Blöcke der maximalen Anzahl entspricht, für die ein als fehlerhafter Block erfasster Speicherblock durch einen in dem reservierten Bereich enthaltenen Speicherblock ersetzbar ist.

2. Speichervorrichtung nach Anspruch 1, wobei der Speichercontroller (220) ferner dazu konfiguriert ist, wenn das Nutzungsverhältnis des Benutzerbereichs kleiner als oder gleich einem Referenznutzungsverhältnis ist und die Anzahl fehlerhafter Blöcke größer als die maximale Anzahl fehlerhafter Blöcke ist, die Kapazität des Benutzerbereichs auf Grundlage einer aktuell verringerten Kapazität des Benutzerbereichs und einer maximal verringerbaren Kapazität des Benutzerbereichs zu verringern.

3. Speichervorrichtung nach Anspruch 2, wobei der Speichercontroller (220) ferner dazu konfiguriert ist:
wenn die aktuell verringerte Kapazität des Benutzerbereichs kleiner als die maximal verringerbare Kapazität des Benutzerbereichs ist, die Kapazität des Benutzerbereichs zu verringern, und
wenn die aktuell verringerte Kapazität des Benutzerbereichs gleich der maximal verringerbaren Kapazität des Benutzerbereichs ist, den nichtflüchtigen Speicher (210) auf einen Nur-Lese-Modus einzustellen.

4. Speichervorrichtung nach Anspruch 3, wobei die maximal verringerbare Kapazität des Benutzerbereichs auf Grundlage einer Referenztabelle für maximal verringerbare Kapazitäten eingestellt wird, die verringerbare Kapazitäten gemäß Nutzungsverhältnissen des Benutzerbereichs angibt.

5. Speichervorrichtung nach einem der Ansprüche 1 bis 4, wobei der Speichercontroller (220) ferner dazu konfiguriert ist, wenn das Nutzungsverhältnis des Benutzerbereichs größer als ein Referenznutzungsverhältnis ist und die Anzahl fehlerhafter Blöcke größer als die maximale Anzahl fehlerhafter Blöcke ist, den nichtflüchtigen Speicher (210) auf einen Nur-Lese-Modus einzustellen.

6. Speichervorrichtung nach einem der Ansprüche 1 bis 5, wobei der Speichercontroller (220) ferner dazu konfiguriert ist, wenn die Anzahl fehlerhafter Blöcke größer als die maximale Anzahl fehlerhafter Blöcke ist, eine Austauschbenachrichtigung an eine Host-Vorrichtung zu übertragen.

7. Speichervorrichtung nach Anspruch 6, wobei die Austauschbenachrichtigung einen Target-Fail-Antwortwert, Condition-Check-Statuswert und Austausch-Sense-Key-Wert aufweist.

8. Speichervorrichtung nach einem der Ansprüche 1 bis 7, wobei der Speichercontroller (220) ferner dazu konfiguriert ist, wenn die Anzahl fehlerhafter Blöcke kleiner als oder gleich der maximalen Anzahl fehlerhafter Blöcke ist, den als fehlerhafter Block erfassten Speicherblock durch einen Speicherblock in dem reservierten Bereich zu ersetzen.

9. Speichervorrichtung nach Anspruch 8, wobei der Speichercontroller (220) ferner dazu konfiguriert ist, wenn die Anzahl fehlerhafter Blöcke größer als ein Referenzverhältnis der maximalen Anzahl fehlerhafter Blöcke ist und die Anzahl fehlerhafter Blöcke kleiner als oder gleich der maximalen Anzahl fehlerhafter Blöcke ist, eine Warnbenachrichtigung an eine Host-Vorrichtung (100) zu übertragen.

10. Speichervorrichtung nach Anspruch 9, wobei die Warnbenachrichtigung einen Target-Fail-Antwortwert, Condition-Check-Statuswert und Austausch-Sense-Key-Wert aufweist.

11. Speichervorrichtung nach Anspruch 1, wobei:
der nichtflüchtige Speicher (210) eine Vielzahl von Ebenen (PL1 bis PLk) aufweist, wobei jede der Vielzahl von Ebenen eine Vielzahl von Speicherblöcken (BLK1 bis BLKn) aufweist; und
der Speichercontroller (220) dazu konfiguriert ist, eine Operation zur Verwaltung fehlerhafter Blöcke an jeder der Vielzahl von Ebenen (PL1 bis PLk) durchzuführen,
die Vielzahl von Speicherblöcken (BLK1 bis BLKn) in jeder der Vielzahl von Ebenen in einem beliebigen von einem Benutzerbereich, einem reservierten Bereich und einem Überprovisionierungsbereich ist, wobei die Vielzahl von Ebenen (PL1 bis PLk) eine erste Ebene aufweist,
der Speichercontroller (220) ferner dazu konfiguriert ist, wenn ein Speicherblock in dem Benutzerbereich der ersten Ebene als fehlerhafter Block erfasst wird, eine nachfolgende Operation auf Grundlage davon durchzuführen, ob eine Anzahl fehlerhafter Blöcke der ersten Ebene größer als eine maximale Anzahl fehlerhafter Blöcke ist, und auf Grundlage eines Nutzungsverhältnisses des Benutzerbereichs der ersten Ebene, und
die nachfolgende Operation das Verringern einer Kapazität des Benutzerbereichs der ersten Ebene aufweist.

12. Speichervorrichtung nach Anspruch 11, wobei der Speichercontroller (220) ferner dazu konfiguriert ist, wenn die Anzahl fehlerhafter Blöcke der ersten Ebene größer als die maximale Anzahl fehlerhafter Blöcke ist und das Nutzungsverhältnis des Benutzerbereichs der ersten Ebene kleiner als oder gleich einem Referenznutzungsverhältnis ist, die Kapazität des Benutzerbereichs der ersten Ebene als die nachfolgende Operation auf Grundlage einer aktuell verringerten Kapazität des Benutzerbereichs der ersten Ebene und einer maximal verringerbaren Kapazität des Benutzerbereichs zu verringern.

13. Speichervorrichtung nach Anspruch 12, wobei der Speichercontroller (220) ferner dazu konfiguriert ist:
wenn die aktuell verringerte Kapazität des Benutzerbereichs der ersten Ebene kleiner als die maximal verringerbare Kapazität des Benutzerbereichs ist, die Kapazität des Benutzerbereichs der ersten Ebene als die nachfolgende Operation zu verringern, und
wenn die aktuell verringerte Kapazität des Benutzerbereichs der ersten Ebene gleich der maximal verringerbaren Kapazität des Benutzerbereichs ist, den nichtflüchtigen Speicher (210) als die nachfolgende Operation auf einen Nur-Lese-Modus einzustellen.

14. Speichervorrichtung nach einem der Ansprüche 11 bis 13, wobei der Speichercontroller (220) ferner dazu konfiguriert ist, wenn die Anzahl fehlerhafter Blöcke der ersten Ebene größer als die maximale Anzahl fehlerhafter Blöcke ist, eine Überprovisionierungskapazität des Überprovisionierungsbereichs der ersten Ebene unverändert aufrechtzuerhalten.

15. Speichervorrichtung nach einem der Ansprüche 11 bis 14, wobei der Speichercontroller (220) ferner dazu konfiguriert ist, wenn die Anzahl fehlerhafter Blöcke der ersten Ebene größer als die maximale Anzahl fehlerhafter Blöcke ist, die nachfolgende Operation durchzuführen und dann an eine Host-Vorrichtung (100) eine Austauschbenachrichtigung zu übertragen, und
wobei die Austauschbenachrichtigung einen Target-Fail-Antwortwert, Condition-Check-Statuswert und Austausch-Sense-Key-Wert aufweist.

## Revendications

1. Dispositif de stockage comprenant :
une mémoire non volatile (210) comprenant une pluralité de blocs de mémoire (BLK1 à BLKn) dans l'une quelconque d'une zone utilisateur, d'une zone réservée et d'une zone de surprovisionnement ; et
un contrôleur de stockage (220) configuré pour effectuer une opération de gestion de blocs défectueux sur la pluralité de blocs de mémoire (BLK1 à BLKn),
dans lequel le contrôleur de stockage (220) est en outre configuré pour :
lorsqu'un bloc de mémoire dans la zone utilisateur est détecté comme bloc défectueux, déterminer si un nombre de blocs défectueux est supérieur à un nombre maximal de blocs défectueux, et
lorsque le nombre de blocs défectueux est supérieur au nombre maximal de blocs défectueux, diminuer une capacité de la zone utilisateur sur la base d'un taux d'utilisation de la zone utilisateur et maintenir telle quelle une capacité de la zone de surprovisionnement,
dans lequel le nombre maximal de blocs défectueux correspond au nombre maximal pour lequel un bloc de mémoire détecté comme bloc défectueux est remplaçable par un bloc de mémoire inclus dans la zone réservée.

2. Dispositif de stockage selon la revendication 1, dans lequel le contrôleur de stockage (220) est en outre configuré pour, lorsque le taux d'utilisation de la zone utilisateur est inférieur ou égal à un taux d'utilisation de référence et que le nombre de blocs défectueux est supérieur au nombre maximal de blocs défectueux, diminuer la capacité de la zone utilisateur sur la base d'une capacité actuellement diminuée de la zone utilisateur et d'une capacité maximale pouvant être diminuée de la zone utilisateur.

3. Dispositif de stockage selon la revendication 2, dans lequel le contrôleur de stockage (220) est en outre configuré pour :
lorsque la capacité actuellement diminuée de la zone utilisateur est inférieure à la capacité maximale pouvant être diminuée de la zone utilisateur, diminuer la capacité de la zone utilisateur, et
lorsque la capacité actuellement diminuée de la zone utilisateur est identique à la capacité maximale pouvant être diminuée de la zone utilisateur, régler la mémoire non volatile (210) sur un mode en lecture seule.

4. Dispositif de stockage selon la revendication 3, dans lequel la capacité maximale pouvant être diminuée de la zone utilisateur est réglée sur la base d'une table de référence de capacité maximale pouvant être diminuée indiquant des capacités pouvant être diminuées en fonction de taux d'utilisation de la zone utilisateur.

5. Dispositif de stockage selon l'une quelconque des revendications 1 à 4, dans lequel le contrôleur de stockage (220) est en outre configuré pour, lorsque le taux d'utilisation de la zone utilisateur est supérieur à un taux d'utilisation de référence et que le nombre de blocs défectueux est supérieur au nombre maximal de blocs défectueux, régler la mémoire non volatile (210) sur un mode en lecture seule.

6. Dispositif de stockage selon l'une quelconque des revendications 1 à 5, dans lequel le contrôleur de stockage (220) est en outre configuré pour, lorsque le nombre de blocs défectueux est supérieur au nombre maximal de blocs défectueux, transmettre une notification de remplacement à un dispositif hôte.

7. Dispositif de stockage selon la revendication 6, dans lequel la notification de remplacement comprend une valeur de réponse Target Fail, une valeur d'état Condition Check et une valeur Sense Key de remplacement.

8. Dispositif de stockage selon l'une quelconque des revendications 1 à 7, dans lequel le contrôleur de stockage (220) est en outre configuré pour, lorsque le nombre de blocs défectueux est inférieur ou égal au nombre maximal de blocs défectueux, remplacer le bloc de mémoire détecté comme bloc défectueux par un bloc de mémoire dans la zone réservée.

9. Dispositif de stockage selon la revendication 8, dans lequel le contrôleur de stockage (220) est en outre configuré pour, lorsque le nombre de blocs défectueux est supérieur à un rapport de référence du nombre maximal de blocs défectueux et que le nombre de blocs défectueux est inférieur ou égal au nombre maximal de blocs défectueux, transmettre une notification d'avertissement à un dispositif hôte (100).

10. Dispositif de stockage selon la revendication 9, dans lequel la notification d'avertissement comprend une valeur de réponse Target Fail, une valeur d'état Condition Check et une valeur Sense Key d'avertissement.

11. Dispositif de stockage selon la revendication 1, dans lequel :
la mémoire non volatile (210) comprend une pluralité de plans (PL1 à PLk), chacun de la pluralité de plans comprenant une pluralité de blocs de mémoire (BLK1 à BLKn) ; et
le contrôleur de stockage (220) est configuré pour effectuer une opération de gestion de blocs défectueux sur chacun de la pluralité de plans (PL1 à PLk),
la pluralité de blocs de mémoire (BLK1 à BLKn) dans chacun de la pluralité de plans étant dans l'une quelconque d'une zone utilisateur, d'une zone réservée et d'une zone de surprovisionnement, la pluralité de plans (PL1 à PLk) comprenant un premier plan,
le contrôleur de stockage (220) est en outre configuré pour, lorsqu'un bloc de mémoire dans la zone utilisateur du premier plan est détecté comme bloc défectueux, effectuer une opération ultérieure sur la base du fait qu'un nombre de blocs défectueux du premier plan est supérieur ou non à un nombre maximal de blocs défectueux et d'un taux d'utilisation de la zone utilisateur du premier plan, et
l'opération ultérieure comprend la diminution d'une capacité de la zone utilisateur du premier plan.

12. Dispositif de stockage selon la revendication 11, dans lequel le contrôleur de stockage (220) est en outre configuré pour, lorsque le nombre de blocs défectueux du premier plan est supérieur au nombre maximal de blocs défectueux et que le taux d'utilisation de la zone utilisateur du premier plan est inférieur ou égal à un taux d'utilisation de référence, diminuer la capacité de la zone utilisateur du premier plan en tant qu'opération ultérieure sur la base d'une capacité actuellement diminuée de la zone utilisateur du premier plan et d'une capacité maximale pouvant être diminuée de la zone utilisateur.

13. Dispositif de stockage selon la revendication 12, dans lequel le contrôleur de stockage (220) est en outre configuré pour :
lorsque la capacité actuellement diminuée de la zone utilisateur du premier plan est inférieure à la capacité maximale pouvant être diminuée de la zone utilisateur, diminuer la capacité de la zone utilisateur du premier plan en tant qu'opération ultérieure, et
lorsque la capacité actuellement diminuée de la zone utilisateur du premier plan est identique à la capacité maximale pouvant être diminuée de la zone utilisateur, régler la mémoire non volatile (210) sur un mode en lecture seule en tant qu'opération ultérieure.

14. Dispositif de stockage selon l'une quelconque des revendications 11 à 13, dans lequel le contrôleur de stockage (220) est en outre configuré pour, lorsque le nombre de blocs défectueux du premier plan est supérieur au nombre maximal de blocs défectueux, maintenir inchangé une capacité de la zone de surprovisionnement du premier plan.

15. Dispositif de stockage selon l'une quelconque des revendications 11 à 14, dans lequel le contrôleur de stockage (220) est en outre configuré pour, lorsque le nombre de blocs défectueux du premier plan est supérieur au nombre maximal de blocs défectueux, effectuer l'opération ultérieure puis transmettre, à un dispositif hôte (100), une notification de remplacement, et
dans lequel la notification de remplacement comprend une valeur de réponse Target Fail, une valeur d'état Condition Check et une valeur Sense Key de remplacement.
